# EUROPÄISCHE PATENTANMELDUNG

(11) **EP 4 012 475 A1**
(43) Veröffentlichungstag der Anmeldung: **15.06.2022**
(21) Anmeldenummer: 20213782.4
(22) Anmeldetag: 14.12.2020
(51) Int. Cl.: G02B 21/00, G02B 21/10, G02B 21/12, G02B 21/26, G02B 21/36, G03B 13/36, G02B 7/08, G02B 3/14, G02B 21/08, H04N 5/232, G02B 21/24

(54) **VORRICHTUNG ZUM ERFASSEN VON BILDERN EINER OBERFLÄCHE**

(71) Anmelder: BST eltromat International GmbH, 33739 Bielefeld (DE)
(72) Erfinder: Böttcher, Frank, 33415 Verl (DE); Greve, Peter, 49191 Belm (DE); Meinhardt, Stefan, 33609 Bielefeld (DE); Reckefuß, Klaus, 33818 Leopoldshöhe (DE)
(74) Vertreter: Ter Meer Steinmeister & Partner

(57) **Zusammenfassung**

Vorrichtung zum Erfassen von Bildern einer Oberfläche (12) mit unterschiedlicher räumlicher Auflösung, wobei die Vorrichtung eine Kamera (16) mit einem auf die Oberfläche fokussierbaren optischen System (18) aufweist, dadurch gekennzeichnet, dass die Vorrichtung ein mechanisches System (20) aufweist, das dazu ausgebildet ist, den Abstand zwischen der Kamera (16) und der Oberfläche (12) zu variieren, und dass das optische System (18) eine Flüssigkeitslinse (26) mit elektronisch einstellbarer Brennweite aufweist.

## Beschreibung

Die Erfindung betrifft eine Vorrichtung zum Erfassen von Bildern einer Oberfläche mit unterschiedlicher räumlicher Auflösung, wobei die Vorrichtung eine Kamera mit einem auf die Oberfläche fokussierbaren optischen System aufweist.

Bei der Herstellung oder Bearbeitung von Materialbahnen, beispielsweise bei der Herstellung von Textilbahnen oder beim Bedrucken von Bedruckstoffbahnen in einer Rotationsdruckmaschine, ist es oft erforderlich oder erwünscht, die Beschaffenheit der Oberfläche der Materialbahn mit einem Kamerasystem zu überwachen. Bei einer laufenden Materialbahn können einzelne Standbilder oder wahlweise auch eine Videosequenz aufgenommen werden. Bei der Bahnbeobachtung in Druckmaschinen wird zumeist die Bildfrequenz mit dem Repeat der auf die Bahn gedruckten Formate synchronisiert, so dass nach dem Stroboskop-Prinzip ein stehendes Bild erzeugt wird. Das Kamerasystem kann auch über die Breite der Bahn traversierend montiert sein, so dass je nach Bedarf unterschiedliche Oberflächenausschnitte der Materialbahn beobachtet werden können.

Oft ist es auch erforderlich, bei der Bilderfassung die räumliche Auflösung situationsabhängig zu variieren, so dass in bestimmten Situationen ein größerer Oberflächenausschnitt der Materialbahn mit niedriger Auflösung erfasst werden kann und in anderen Situationen ein Detail auf der Materialbahn mit höherer Auflösung untersucht werden kann. Grundsätzlich wäre für diese Anwendungsfälle eine Kamera mit einem Zoom-Objektiv wünschenswert. Zoom-Optiken, die eine ausreichende Bildqualität ermöglichen und in Anbetracht der oft rauen Einsatzbedingungen in einer Maschine wie etwa einer Druckmaschine die nötige Robustheit aufweisen, sind jedoch relativ kostspielig.

In EP 1 940 141 A1 wird eine Bilderfassungsvorrichtung mit zwei Kameras beschrieben, deren Optiken für unterschiedliche Zoom-Faktoren ausgelegt sind, so dass mit der einen Kamera ein Bild mit niedriger Auflösung erfasst werden kann und parallel dazu mit der zweiten Kamera ein Bild mit höherer Auflösung.

Aufgabe der Erfindung ist es, eine einfach aufgebaute Bilderfassungsvorrichtung zu schaffen, bei der die Bildauflösung flexibel einstellbar ist.

Diese Aufgabe wird erfindungsgemäß dadurch gelöst, dass die Vorrichtung ein mechanisches System aufweist, das dazu ausgebildet ist, den Abstand zwischen der Kamera und der Oberfläche zu variieren, und dass das optische System eine Flüssigkeitslinse mit elektronisch einstellbarer Brennweite aufweist.

Bei dieser Vorrichtung kann das Auflösungsvermögen nach Bedarf, insbesondere auch stufenlos, eingestellt werden, indem die Kamera näher an die Oberfläche der Materialbahn herangefahren wird oder weiter von dieser Oberfläche weg bewegt wird. Mit der Flüssigkeitslinse lässt sich dabei die Fokussierung auf einfache Weise an die jeweils gewählte Objektweite anpassen.

Bei einer Flüssigkeitslinse wird das lichtbrechende Element durch einen linsenförmigen Meniskus zwischen zwei Flüssigkeiten mit unterschiedlichem Brechungsindex gebildet, die zwischen transparenten Elektroden angeordnet sind. Eine der beiden Flüssigkeiten ist eine polare Flüssigkeit, so dass der Kontaktwinkel eines durch diese Flüssigkeit gebildeten Tropfens von der an die Elektroden angelegten Spannung abhängig ist. Durch Variieren der Spannung kann deshalb die Ausdehnung des Tropfens und damit die Brennweite der durch diesen Tropfen gebildeten Linse eingestellt werden. Ein Beispiel einer solchen Flüssigkeitslinse wird in EP 2 837 957 B1 beschrieben.

Vorteilhafte Ausgestaltungen und Weiterbildungen der Erfindung sind in den Unteransprüchen angegeben.

Da zwischen der an den Elektroden anliegenden Spannung und der Brennweite der Flüssigkeitslinse ein bekannter und stabiler Zusammenhang besteht, lässt sich für eine gegebene Objektweite der Fokus schnell und präzise einstellen, ohne dass eine aufwändige und zeitraubende Regelung des Fokus in einem geschlossenen Regelkreis erforderlich ist.

Das mechanische System der Vorrichtung wird in einer Ausführungsform durch einen Linearmotor gebildet, dessen Stator rechtwinklig zu der Oberfläche verläuft, von der ein Bild erfasst werden soll, und dessen Läufer die Kamera trägt. Wahlweise kann der Stator auch traversierend vor der Materialbahn angeordnet sein.

Bei dem Linearmotor kann es sich um einen Linear-Schrittmotor handeln, mit dem eine schnelle und präzise Steuerung des Abstands zwischen Kamera und Objektoberfläche möglich ist.

Für bestimmte Anwendungsfälle, beispielsweise bei der Erfassung von mit Lack bedruckten Oberflächenzonen auf der Materialbahn oder der Erfassung von anderen glänzenden Oberflächenzonen, kann eine gleichmäßige und diffuse Hellfeldbeleuchtung der Oberfläche erwünscht oder erforderlich sein. In dem Fall kann eine Flächenleuchte mitbeweglich an der Kamera angeordnet sein, beispielsweise so, dass sie sich rechtwinklig zur optischen Achse des optischen Systems erstreckt und eine im Verhältnis zur Gesamtfläche der Leuchte kleine Öffnung für den Strahlengang des optischen Systems bildet.

Im folgenden wird ein Ausführungsbeispiel anhand der Zeichnung näher erläutert.

Es zeigen:
- Fig. 1: eine schematische Seitenansicht einer erfindungsgemäßen Vorrichtung zur Erfassung von Bildern einer Materialbahn; und
- Fig. 2: die Vorrichtung nach Fig. 1 in einer Konfiguration für die Erfassung höher aufgelöster Bilder.

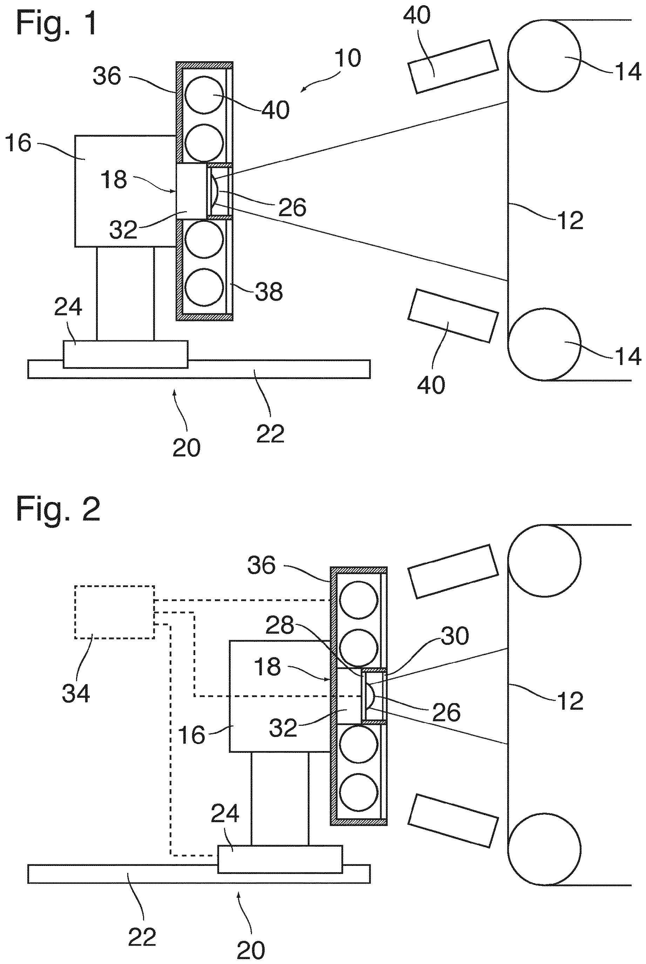

Die in Fig. 1 gezeigte Bilderfassungsvorrichtung 10 dient zur Aufnahme eines Bildes von einem ebenen Oberflächenausschnitt einer Materialbahn 12, die über Umlenkrollen 14 geführt ist. Beispielsweise kann es sich bei der Materialbahn 12 um eine Bedruckstoffbahn in einer Druckmaschine handeln.

Die Bilderfassungsvorrichtung 10 weist eine digitale Kamera 16 mit einem optischen System 18 sowie ein mechanisches System 20 auf, mit dem die Kamera senkrecht zur Ebene der Materialbahn 12 verfahrbar ist. Im gezeigten Beispiel wird das mechanische System durch einen Linear-Schrittmotor mit einem linearen Stator 22 und einem Läufer 24 gebildet, der die Kamera 16 trägt.

In Fig. 1 ist die Kamera 16 in einem relativ großen Abstand zur Materialbahn 12 angeordnet, so dass ein verhältnismäßig großer Oberflächenausschnitt der Materialbahn aufgenommen werden kann.

Fig. 2 zeigt die Bilderfassungsvorrichtung in einem Zustand, in dem die Kamera 16 näher an die Materialbahn 12 herangefahren ist, so dass ein Bild eines kleineren Oberflächenausschnittes der Materialbahn 12 mit höherer räumlicher Auflösung aufgezeichnet werden kann. Damit auf dem Sensorfeld der Kamera 16 dennoch ein scharfes Bild entsteht, muss die Brennweite des optischen Systems 18 angepasst werden. Zu diesem Zweck weist das optische System eine Flüssigkeitslinse 26 auf, deren Brennweite elektronisch einstellbar ist. Wie in der Zeichnung schematisch dargestellt ist, wird die Flüssigkeitslinse durch zwei nicht mischbare Flüssigkeiten mit unterschiedlichen Brechungsindizes gebildet, die in einem Volumen zwischen zwei transparenten Elektroden 28, 30 eingeschlossen sind. Die Flüssigkeit mit dem größeren Brechungsindex bildet auf einer der Elektroden einen Tropfen, der das eigentliche lichtbrechende Element der Linse darstellt. Wenn man die zwischen den Elektroden 28, 30 anliegende Spannung verändert, so ändert sich der Kontaktwinkel und damit die Wölbung dieses Tropfens. Im gezeigten Beispiel ist der Kontaktwinkel des Tropfens in Fig. 1 kleiner als in Fig. 2, und damit ist in Fig. 1 der Tropfen ausgedehnter und weniger stark gewölbt, so dass sich eine größere Brennweite der Linse ergibt.

Die Flüssigkeitslinse 26 bildet nur eine von mehreren Linsen des optischen Systems 18. Die übrigen Linsen bilden ein Teilsystem 32 mit Festbrennweite. Zur Anpassung des Fokus des optischen Systems an die Objektweite, also den Abstand zwischen der Kamera 16 und der Materialbahn 12, braucht lediglich die Brennweite der Flüssigkeitslinse 26 verändert zu werden, indem eine geeignete Spannung an die Elektroden 28, 30 angelegt wird.

In Fig. 2 ist schematisch eine elektronische Steuereinrichtung 34 gezeigt, die den Linearmotor des mechanischen Systems 20 steuert und so die Objektweite auf einen von einem Benutzer eingegebenen Wert einstellt. Zugleich steuert die Steuereinrichtung 34 auch die an den Elektroden 28 anliegende Spannung. Dazu ist in einem elektronischen Speicher der Steuereinrichtung 34 eine Tabelle abgelegt, die für jede einstellbare Position der Kamera 16 diejenige Spannung angibt, die der nötigen Brennweite der Flüssigkeitslinse 26 entspricht.

Der Stator 22 des Linearmotors kann seinerseits traversierend in der Druckmaschine montiert sein, so dass sich die gesamte Bilderfassungsvorrichtung 10 in der Richtung quer zur Laufrichtung der Materialbahn 12 (senkrecht zur Zeichenebene in Fig. 1 und 2) bewegen lässt, um nacheinander Bilder von Oberflächenausschnitten der Materialbahn 12 aufzunehmen, die sich in unterschiedlichen lateralen Positionen befinden.

Im gezeigten Beispiel weist die Bilderfassungsvorrichtung 10 eine Flächenleuchte 36 auf, die mitbewegbar an der Kamera 16 montiert ist und es erlaubt, den jeweils von der Kamera aufzunehmenden Oberflächenausschnitt der Materialbahn 12 gleichmäßig mit diffusem Licht auszuleuchten. Die Flächenleuchte 36, die in der Zeichnung im Schnitt dargestellt ist, hat die Form eines quaderförmigen flachen Kastens, dessen Abmessungen in den Richtungen parallel zur Ebene der Materialbahn 12 vorzugsweise größer sind als der größte von der Kamera 16 aufzunehmende Bildausschnitt. Dieser Kasten ist so an der Kamera montiert, dass er sich parallel zur Ebene der Materialbahn 12 erstreckt und das optische System 18 der Kamera in einer mittigen Öffnung aufnimmt.

Aus Gründen der Deutlichkeit ist die Bilderfassungsvorrichtung 10 hier nicht maßstäblich gezeigt. In der Praxis ist der Durchmesser des optischen Systems 18 im Verhältnis zur Gesamtfläche der Flächenleuchte 36 deutlich kleiner, so dass die durch die Öffnung in der Flächenleuchte verursachte Störung des Lichtfeldes vernachlässigbar ist.

Die Flächenleuchte 36 wird auf der der Materialbahn 12 zugewandten Seite durch eine lichtdurchlässige aber das Licht diffus streuende Scheibe 38 begrenzt. Die übrigen Wände des kastenförmigen Gehäuses der Flächenleuchte haben innenseitig eine weiße, das Licht diffus streuende Beschichtung mit hoher Reflektivität. An den einander gegenüberliegenden Seitenwänden des Gehäuses sind lichtstarke LEDs 40 (oder COBs; Chip on Board) angeordnet, die die Flächen dieser Seitenwände nahezu vollständig ausfüllen. Beispielsweise sind die LEDs kreisförmig, mit einem Durchmesser von 15 mm oder mehr. Das von den LEDs abgegebene Licht breitet sich in der Luft im Inneren des Gehäuses der Flächenleuchte aus und wird an den Wänden des Gehäuses sowie an der Scheibe 38 diffus gestreut, bis es schließlich diffus aus der Scheibe 38 austritt und das Bildfeld auf der Materialbahn 12 gleichmäßig ausleuchtet. Die Verwendung von großen, lichtstarken LEDs ermöglicht es, Lichtblitze mit hoher Flächenhelligkeit zu erzeugen, wie sie beispielsweise benötigt werden, wenn lackierte Oberflächenzonen auf der Materialbahn 12 detektiert werden sollen.

Aufgrund der großen Abmessungen der Flächenleuchte 36 in den Richtungen parallel zur Ebene der Materialbahn 12 ändert sich die Beleuchtungsstärke auf der Oberfläche der Materialbahn nur wenig, wenn die Kamera 16 aus der in Fig. 1 gezeigten Position in die in Fig. 2 gezeigte Position verfahren wird. Wahlweise kann die Helligkeit der Flächenleuchte 36 auch mit Hilfe der Steuereinrichtung 34 einstellbar sein, so dass sich die Beleuchtungsstärke präzise an die jeweilige Kameraposition anpassen lässt.

Da sich die Flächenleuchte 36 mit der Kamera 16 mitbewegt, bleibt die räumliche Beziehung zum Strahlengang des optischen Systems 18 unverändert, so dass es durch die lineare Bewegung der Kamera in verschiedene Positionen nicht zu Abschattungen kommt.

Im gezeigten Beispiel ist zwischen dem Bewegungsbereich der Kamera 16 und der Materialbahn 12 noch ein stationäres Dunkelfeld-Beleuchtungssystem 40 angeordnet, so dass mit der Kamera 16 auch Dunkelfeldaufnahmen gemacht werden können.

## Patentansprüche

1. Vorrichtung zum Erfassen von Bildern einer Oberfläche (12) mit unterschiedlicher räumlicher Auflösung, wobei die Vorrichtung eine Kamera (16) mit einem auf die Oberfläche fokussierbaren optischen System (18) aufweist, **dadurch gekennzeichnet, dass** die Vorrichtung ein mechanisches System (20) aufweist, das dazu ausgebildet ist, den Abstand zwischen der Kamera (16) und der Oberfläche (12) zu variieren, und dass das optische System (18) eine Flüssigkeitslinse (26) mit elektronisch einstellbarer Brennweite aufweist.

2. Vorrichtung nach Anspruch 1, bei der das optische System (18) ein optisches Teilsystem (32) mit Festbrennweite aufweist.

3. Vorrichtung nach Anspruch 1 oder 2, bei der das mechanische System (20) einen Linearantrieb für die Kamera (16) aufweist.

4. Vorrichtung nach Anspruch 3, bei der Linearantrieb ein Linearmotor ist, mit einem Stator (22), der sich in einer Richtung parallel zur optischen Achse des optischen Systems (18) erstreckt, und mit einem Läufer (24), der die Kamera (16) trägt.

5. Vorrichtung nach Anspruch 4, bei der der Linearmotor des mechanischen Systems (20) ein Linear-Schrittmotor ist.

6. Vorrichtung nach einem der vorstehenden Ansprüche, mit einer elektronischen Steuereinrichtung (34), die dazu ausgebildet ist, das mechanische System (20) und die Flüssigkeitslinse (26) zu steuern und dabei die Brennweite der Flüssigkeitslinse (26) an die jeweils vom mechanischen System (20) anzufahrende Position der Kamera (16) anzupassen.

7. Vorrichtung nach einem der vorstehenden Ansprüche, bei der zur Ausleuchtung der Oberfläche (12), von der das Bild aufzunehmen ist, eine parallel zu dieser Oberfläche orientierte Flächenleuchte (36) vorgesehen ist, die mitbeweglich an der Kamera (16) montiert ist.

8. Vorrichtung nach Anspruch 7, bei der die Flächenleuchte (36) eine mittige Öffnung für das optische System (18) und/oder dessen Strahlengang aufweist.

9. Maschine zur Herstellung und/oder Bearbeitung einer Materialbahn (12), **gekennzeichnet durch** eine Vorrichtung nach einem der Ansprüche 1 bis 7 zur Erfassung von Bildern einer Oberfläche der Materialbahn (12).
